# EUROPEAN PATENT APPLICATION

(11) **EP 2 929 998 A1**
(43) Date of publication of application: **14.10.2015**
(21) Application number: 14767889.0
(22) Date of filing: 19.03.2014
(51) Int. Cl.: B29B 7/48, B29C 47/76

(54) **CONTINUOUS EXTRUSION DEVICE BASED ON TWIN SCREW EXTRUDER**

(30) Priority: 22.03.2013 JP 2013059891
(71) Applicant: The Japan Steel Works, Ltd., Tokyo 141-0032 (JP)
(72) Inventor: TAKAMOTO, Seiji, Hiroshima-shi Hiroshima 736-8602 (JP); ISHIKAWA, Makoto, Hiroshima-shi Hiroshima 736-8602 (JP); KAKIZAKI, Jun, Hiroshima-shi Hiroshima 736-8602 (JP); FUJITA, Reo, Hiroshima-shi Hiroshima 736-8602 (JP); YATA, Kyohei, Hiroshima-shi Hiroshima 736-8602 (JP)
(74) Representative: Regimbeau
(86) International application number: PCT/JP2014/057545
(87) International publication number: WO 2014/148553

(57) **Abstract**

The present invention performs, by using a pair of filters, continuous operation of a twin screw extruder even during replacement of a filter. The continuous extrusion device based on a twin screw extruder of the present invention has a pair of filters (6, 6a) provided in a degassing device (5), and a partition valve (24) having a valve (34) for setting the filters (6, 6a) and a screw hole (16) of a cylinder (1) to a communicating or non-communicating state, degassing being performed by using the second filter (6a) during replacement of the first filter (6), and the twin screw extruder being operated continuously even during replacement of the filters (6, 6a).

## Description

### TECHNICAL FIELD

The present invention relates to a continuous extrusion device based on a twin screw extruder, and in particular, to novel improvements for enabling continuous operation of a twin screw extruder by operating the extruder using one of a pair of filters during replacement of the other one of the filters.

### BACKGROUND ART

Conventionally, an extrusion device based on a twin axis extruder of this type has been proposed in Patent Document 1, and the configuration of this device is shown in Fig. 5. Fig. 5 uses an equivalent diagram rather than the same diagram as Patent Document 1. In Fig. 5, 1 is a cylinder, 2 is a screw, 3 is a hopper, 4 is a mixing section, 5 is a degassing device, 6 is a filter, and 7 is a downstream vent. An inert gas 13 may be supplied to the hopper 3 and the vent 7 in order to prevent oxidation of the plastic. The vent 7 may be open to the atmosphere or may be depressurized by a vacuum pump, or the like, and the vent 7 may also be omitted.

Next, the operation is described. Plastic raw material is supplied from the hopper 3 to the cylinder 1, and is conveyed to the downstream side of the cylinder 1 by rotation of the screw 2. The conveyed plastic raw material is mixed and plasticized by the thermal energy supplied from the cylinder 1, which can be heated and cooled, and the shearing stress of the mixing section 4. When plastic raw material is supplied to the hopper 3, conveyed to the downstream side of the cylinder 1 by rotation of the screw 2, and mixed and plasticized in the mixing section 4, the molten plastic fills the mixing section 4 and implements sealing, and inert gas components or incorporated air that has become mixed in with the plastic raw material, and volatile components remaining in the plastic raw material, and the like, flow back towards the hopper 3, which is at low pressure. These gas components reduce the bulk density of the raw material inside the cylinder 1 from the mixing section 4 to the hopper 3, and reduce the amount of raw material conveyed for each revolution of the screw, and therefore are removed by passing through a degassing device 5 by an external suction source 8, such as a vacuum pump, or the like.

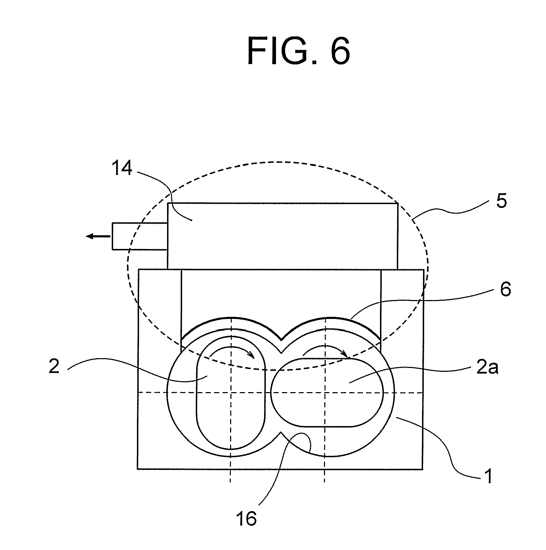

Fig. 6 shows one example of a cross-sectional diagram of a conventional degassing device 5 in a direction perpendicular to the screw axis. Two screw holes 16 are formed in the cylinder 1 and two screws 2, 2a are inserted therein. A ring-shaped filter 6 is provided in a position above the screw holes 16 in the cylinder 1, with a gap to avoid interference with the screws 2, 2a. A degassing chamber 14 having a line connected to the atmosphere or an external suction source is disposed above the cylinder 1, and inert gas components or incorporated air, which are mixed in with the plastic raw material, and volatile components remaining in the plastic raw materials, and the like, are separated and removed by a filter 6.

Although not shown in the drawings, the extruder indicated in Patent Document 2 is configured so as to achieve a filtering action by providing a porous wall section inside the material of the cylinder.

Patent Document 1 : Japanese Utility Model Registration No. 2585280
Patent Document 2 : Japanese Patent Application Publication No. 2008-254444

### DISCLOSURE OF THE INVENTION

A conventional extrusion device has problems such as the following, due to having the configuration described above.

More specifically, the degassing device used in Patent Document 1 above removes inert gas components or incorporated air that has become mixed into the plastic raw material, and volatile components remaining in the plastic material, and the like, by using an external suction source, such as a vacuum pump, but if the filter becomes blocked, the machine is stopped and the functions of the degassing device cannot be obtained unless the filter is replaced.

Furthermore, in the extrusion device of Patent Document 2, supposing that the filter (porous wall section) becomes blocked by bulk material in the form of dust, a method is adopted to carry out pressurized gas purging in order to maintain the degassing function, but when the pressurized gas purging is carried out, the degassing function is lost, a large amount of gas is included in bulk material in the form of powder, the apparent bulk density falls, whereby the amount of material processed may decline.

The present invention was devised in view of the problems of the prior art described above, and can provide, in particular, a degassing device which removes inert gas components or incorporated air which becomes mixed in with plastic raw material, and volatile components remaining in the plastic raw material, and the like, wherein, even when a filter has become blocked with plastic raw material and the function of the degassing device has declined, the filter can be replaced without stopping the operation of the extruder, the function of the degassing device can be maintained, and a stable continuous extrusion operation can be achieved.

The continuous extrusion device based on a twin screw extruder according to the present invention is an extrusion device based on a twin screw extruder, in which degassing devices are provided in a cylinder which has a conveyance section including a hopper and inside which a pair of screws are provided, plastic raw material conveyed inside the cylinder being pushed out on the downstream side of the cylinder, while at least inert gas components, incorporated air and volatile components contained in the plastic raw material are discharged externally via the degassing devices, wherein the degassing device is provided with first and second filters disposed to communicate with a screw hole of the cylinder, and a partition valve provided between the filters and having a valve for opening and closing communication between the filters and the screw hole, are provided in; and when replacing the first or second filter during operation, the valve of the partition valve is operated to establish a non-communicating state between the first or second filter that is to be replaced and the screw hole, then the replacement is carried out, and by performing degassing using the first or second filter that is to be replaced, the extrusion operation is carried out continuously without stopping operation during the replacement; furthermore, the replacement time for replacing the first or second filter is determined on the basis of a first pressure obtained by detecting a pressure inside the cylinder or a second pressure obtained by detecting a pressure on the downstream side of the filters in the degassing devices; furthermore, the second pressure is detected by a pressure sensor in one or a plurality of suction pumps provided on the downstream side of the degassing device and the first and second degassing devices; furthermore, the filters are of a cylindrical cartridge type or a leaf disk type; furthermore, the partition valve comprises a single valve only, and the valve has a cup-shaped cross-section and has one opening; furthermore, the partition valve comprises a pair of valves, and the valves have a cylindrical shape or a cup-shaped cross-section; and furthermore, first and second filter chambers inside which the filters are provided are cooled by cooling means.

The continuous extrusion device according to the present invention can achieve the following beneficial effects due to having the configuration described above.

In other words, in an extrusion method and device based on a twin screw extruder, in which first and second degassing devices are provided in a cylinder which has a conveyance section including a hopper and inside which a pair of screws are provided, the extrusion device operating so as to push plastic raw material conveyed inside the cylinder out on the downstream side of the cylinder, while at least inert gas components, incorporated air and volatile components contained in the plastic raw material are discharged externally via the degassing devices; the degassing device is provided with first and second filters disposed to communicate with a screw hole of the cylinder, and a partition valve provided between the filters and having a valve for opening and closing communication between the filters and the screw hole; and when replacing the first or second filter during operation, the valve of the partition valve is operated to establish a non-communicating state between the first or second filter that is to be replaced and the screw hole, and the replacement is carried out, and by performing degassing using the first or second filter that is not being replaced, the extrusion operation can be carried out continuously without stopping operation during the replacement; and consequently the solid plastic raw material in the cylinder from the hopper to the mixing section screw is compressed, the bulk density is increased, the amount of raw material conveyed per revolution of the screw is increased, and the processing capacity can be improved dramatically. Furthermore, even if the filter becomes blocked and the functional effects of the degassing device decline, it is possible to replace the filter without stopping the machine, and a continuous extrusion operation can be performed while maintaining a degassing function.

Furthermore, since the replacement time for replacing the first or second filter is determined on the basis of a first pressure obtained by detecting a pressure inside the cylinder or a second pressure obtained by detecting a pressure on the downstream side of the filters in the degassing devices, then it is possible to obtain the filter replacement time accurately.

Moreover, since the second pressure is detected by a pressure sensor in one or a plurality of suction pumps provided to the downstream side of the degassing device and the first and second degassing devices, then it is possible to detect the pressure inside the degassing device accurately.

Furthermore, since the filter is of a cylindrical cartridge type or a leaf disk type, effective filtering is performed and replacement is easy to perform.

Moreover, since the partition valve comprises a single valve only, and the valve has a cup-shaped cross-section and has one opening, the opening/closing operation is easy to perform.

Moreover, since the partition valve comprises a pair of valves, and the valves have a cylindrical shape or a cup-shaped cross-section, then a valve opening/closing operation can be obtained by a simple configuration.

Furthermore, since the first and second filter chambers inside which the filters are provided are cooled by cooling means, then it is possible to avoid melting of the solid plastic raw material that has been sucked into the filter chambers.

Moreover, since opening/closing lids for use when replacing the filters are provided, then replacement of the filters can be carried out simply.

### BRIEF DESCRIPTION OF THE DRAWINGS

Fig. 1 is a cross-sectional diagram of an extrusion device based on a twin axis extruder according to the present invention;
Fig. 2 is a schematic enlarged cross-sectional drawing of the degassing device in Fig. 1;
Fig. 3 is a cross-sectional diagram showing a case where the two screws in Fig. 2 are non-intermeshing in different directions;
Fig. 4 is a schematic drawing showing a further mode of Fig. 2;

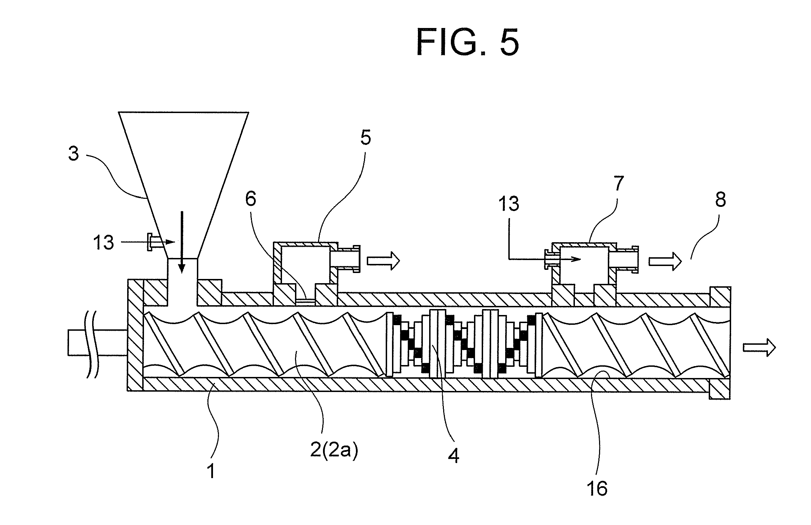

Fig. 5 is a schematic drawing showing a conventional twin axis extruder; and
Fig. 6 is an enlarged schematic drawing showing a principal part of Fig. 5.

### BEST MODE FOR CARRYING OUT THE INVENTION

It is an object of the present invention to provide a continuous extrusion device based on a twin screw extruder whereby continuous operation can be performed by operating a twin screw extruder using one filter, of a pair of filters, while the other filter of the pair is being replaced.

### PRACTICAL EXAMPLES

A preferred embodiment of a continuous extrusion device based on a twin screw extruder according to the present invention is described below with reference to the drawings.

Parts which are the same as or equivalent to the prior art example are labelled with the same reference numerals.

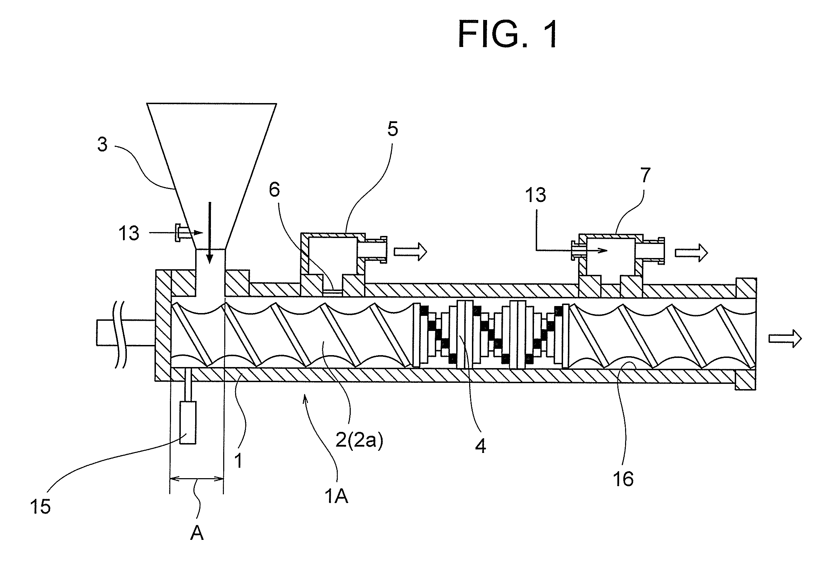

In Fig. 1, reference numeral 1 is a cylinder, 2, 2a are screws, 3 is a hopper, 4 is a mixing section, 5 is a degassing device, 6 is a filter, and 7 is a downstream-side vent; inert gas 13 is supplied to the hopper 3 and the vent 7 in order to prevent oxidation of the plastic, but there may be a case where the inert gas supply is not implemented.

A first pressure detector 15 for detecting the pressure inside the cylinder 1 is provided in the transport section 1A on the furthest upstream side of the cylinder 1, in other words, a furthest upstream position A up to the part where the hopper 3 is positioned.

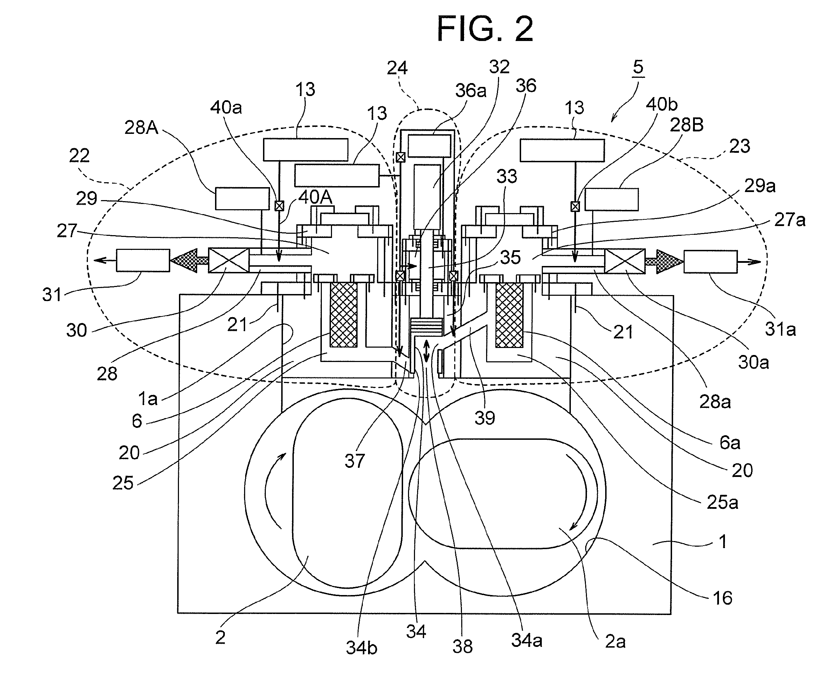

The degassing device 5 is actually configured as shown in Fig. 2.

In other words, in Fig. 2, reference numeral 1 indicates a cylinder in which a first screw 2 and a second screw 2a that intermesh in the same direction are disposed rotatably inside a screw hole 16; a metal assembly 20 of a degassing device 5 is installed in an upper opening 1a of the cylinder 1, and is fixed to the top of the cylinder 1 by bolts 21.

Inside the metal assembly 20, a first degassing device 22 is provided so as to correspond to the first screw 2, a second degassing device 23 is provided so as to correspond to the second screw 2a, and a partition valve 24 having a single-valve configuration is disposed between the respective degassing devices 22, 23.

In the first degassing device 22, a first filter 6 of a cylindrical cartridge type or a leaf disk type is provided inside a first filter chamber 25 of the metal assembly 20, a first degassing chamber 27 and a first degassing line 28 are formed at a position above the first filter 6, and a first opening/closing lid 29 is provided detachably on top of the first degassing chamber 27.

A first opening/closing valve 30 is provided in the first degassing line 28, and a first suction pump 31 is connected to this first opening/closing valve 30.

The second degassing device 23 has the same configuration as the first degassing device 22 described above; a second filter 6a of a cylindrical cartridge type or leaf filter type is provided inside the second filter chamber 25a of the metal assembly 20, a second degassing chamber 27a and a second degassing line 28a are formed at a position above the second filter 6a, and a second opening/closing lid 29a is provided detachably on top of the second degassing chamber 27a.

A second opening/closing valve 30a is provided in the second degassing line 28a, and a second suction pump 31a is connected to this second opening/closing valve 30a.

The partition valve 24 is constituted by a cylinder 32, a piston 33, a valve 34 and a case 35, and a sealed chamber 36 is formed above the case 35; the valve 34 is formed to have a cup-shaped cross-section overall, an opening 34a is formed above the valve 34, and a non-valve section 34b is formed at the lower end of the valve 34.

The first filter chamber 25 of the metal assembly 20 is connected, via a communication section 37, to a valve chamber 38 in which the valve 34 can operate by moving upwards and downwards, and the second filter chamber 25a is connected to the valve chamber 38 via a communication section 39 of the metal assembly 20, the valve 34 and the opening 34a in the case 35.

A configuration is adopted wherein inert gas 13 is supplied to the respective degassing lines 28, 28a via the opening/closing valves 40a, 40b, and furthermore, first and second pressure meters 28A, 28B are provided in the degassing lines.

Furthermore, a third pressure meter 36a is provided in the sealed chamber 36, and pressure meters (not illustrated) for measuring the pressures inside the degassing chambers 27, 27a and the degassing lines 28, 28a, in other words, the pressures to the downstream side of the filters 6, 6a, are incorporated into the suction pumps 31, 31a.

There follows a description of an operation in which a filter 6, 6a is replaced during operation of the twin axis extruder and stopping of the operation of the twin axis extruder is avoided during replacement of the filters 6, 6a, in the configuration in Fig. 2 described above.

Firstly, when degassing is performed by the first degassing device 22 and a degassing function and effect are obtained, the first opening/closing valve 30 in the first degassing line 28 is opened, and the first opening/closing valve 40a of the inert gas supply line 40A is closed, and inert gas is not supplied from the inert gas supply line 40A. If the first filter 6 becomes blocked with solid plastic raw material and the gas separation function of the first filter 6 declines, then in order to replace the first filter 6, after switching to the second degassing device 23 by means of the partition valve 24 (in other words, the state in Fig. 2 where the communication section 37 is set to a closed state and the opening 34a is set to an open state), the first opening/closing valve 30 of the first degassing line 28 is closed, the first opening/closing valve 40a of the inert gas supply line 40A is opened, inert gas is supplied from the inert gas supply line 40A until reaching approximately atmospheric pressure, and the pressure is confirmed by the first pressure meter 28a. Thereupon, the first opening/closing lid 29 above the first degassing chamber is opened, the bolts fixing the first filter 6 are removed, and the first filter 6 is taken out and replaced with a new first filter 6.

The partition valve 24 shown in Fig. 2 is a single valve, which operates upwards and downwards by pneumatic pressure or hydraulic pressure. When switching from the second degassing device 23 to the first degassing device 22 by the partition valve 24, the valve 34 is raised upwards, and therefore both the communication section 37 that is a solid plastic flow path inlet which, in the twin screw extruder, leads to the first filter chamber 25 in the first degassing device 22, and the opening 34a that is a solid plastic flow path inlet which, in the twin screw extruder, leads to the second filter chamber 25a in the second degassing device 23, are opened provisionally, whereupon, the communication section 37 that is the solid plastic flow path inlet which, in the twin screw extruder, leads to the first filter chamber 25 in the first degassing device 22, is opened completely, and the opening 34a that is the solid plastic flow path inlet which, in the twin screw extruder, leads to the second filter chamber 25a in the second degassing device 23, is closed completely.

By carrying out an operation of this kind, decline in the function and effects of the degassing device 5 is avoided. The same applies when switching from the first degassing device 22 to the second degassing device 23.

Furthermore, inert gas 13 is supplied to the sealed chamber 36 located above the seal mechanism which is positioned above the case 35 of the partition valve 24, and internal pressure is controlled by the pressure meter 36a.

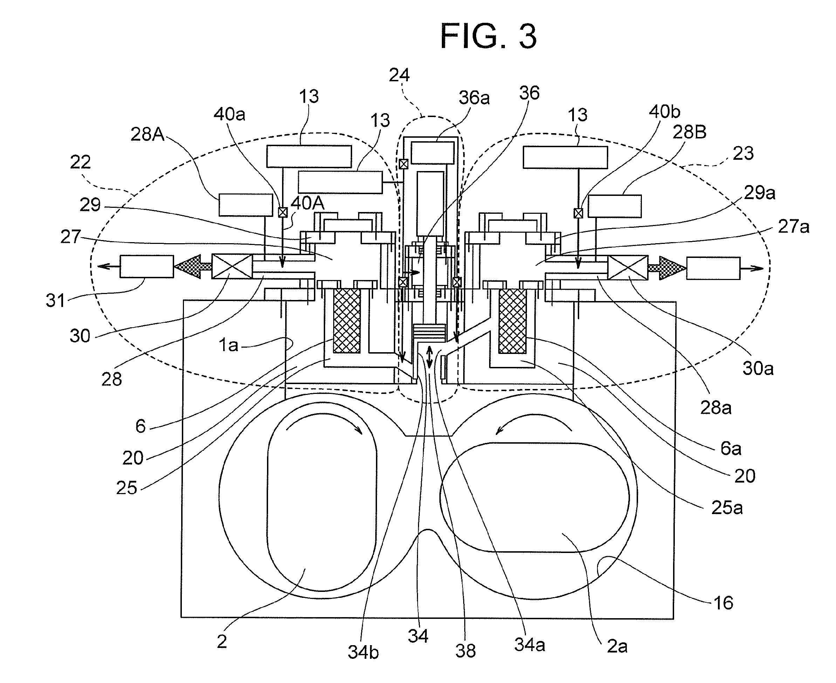

Fig. 3 shows a configuration that uses the same simple partition valve 24 as Fig. 2, but the screws 2, 2a differ from the case in Fig. 2 and are arranged so as not to intermesh in different directions. Parts which are the same as Fig. 2 are labelled with the same reference numerals and description thereof is omitted here.

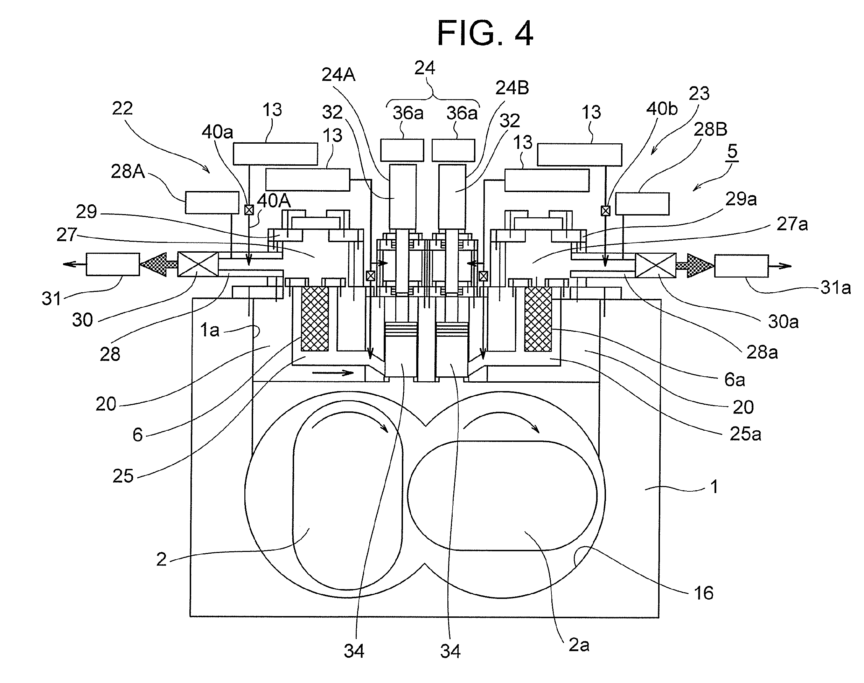

In Fig. 4, the partition valve 24 is configured by first and second partition valves 24A, 24B, rather than a single partition valve 24 as in Fig. 2 and Fig. 3, and only the portions that are different to Fig. 2 and Fig. 3 are described here. The same parts are labelled with the same reference numerals and description thereof is omitted in order to avoid repetition.

Relative to the partition valves 24A, 24B, the valves 34 have a different configuration to that in Fig. 2 and Fig. 3 and are formed with a completely cylindrical cross-section without providing the opening 34a described above. When the valves 34 are moved upwards simultaneously, the communication section 37 and the communication section 39 of the first and second filter chambers 25, 25a communicate with the screw hole 16 of the extruder, in other words, the inner hole of the cylinder, and by moving the valves downwards simultaneously, or one at a time, one or the other of the communication sections 37, 39 is set to a non-communicating state, with a time differential therebetween.

The degassing device 5 in Fig. 4 has the same function as the configuration in Fig. 2 and Fig. 3 described above, but when switching from the first degassing device 22 to the second degassing device 23, or when switching from the second degassing device 23 to the first degassing device 22, the two partition valves 24A, 24B are operated, and the communication section 37 of the solid plastic flow path which, in the twin screw extruder, leads to the first filter chamber 25 of the first degassing device 22, and the communication section 39 of the solid plastic flow path which, in the twin screw extruder, leads to the second filter chamber 25a of the second degassing device 23, are both opened provisionally, whereupon the communication section 37 of the solid plastic flow path which is connected to the first filter chamber 25 in the twin screw extruder of the first degassing device 22 is closed, and the solid plastic flow path communication section 39 which leads to the second filter chamber 25a of the second degassing device 23 in the twin screw extruder is opened. Furthermore, when switching from the second degassing device 23 to the first degassing device 22, the two partition valves 24A, 24B are opened, and a reverse operation to that described above is performed.

Furthermore, the partition valves that are operated may be valves which function when moved in the up/down or left/right directions, or may be valves which function when rotated by one revolution or less, or may be valves which function when rotated and moved in the up/down or left/right directions.

Furthermore, hydraulic pressure and pneumatic pressure are described here as drive devices for operating the partition valves, but the valves may also be operated by a motor, or manually.

The filter may be a flat type filter, or a cylindrical cartridge type filter, or a leaf disk type filter. The filter chamber may have a mechanism, such as a jacket and/or channel, or the like, provided in a wall of the first and second filter chambers 25, 25a, so that the plastic raw material does not melt, a cooling medium such as water being passed therein so as to provide a cooling function in the chamber.

Furthermore, the degassing device 5 described here functions by combining two devices, first and second degassing devices 22, 23, but may also be a device which provides the same function by combining two or more degassing devices.

Moreover, in the figure the suction pump provided to the downstream side of the first and second degassing devices 22, 23 uses two suction pumps 31, 31a, but if the piping after the first and second opening/closing valves 30, 30a is combined into one pipe, then it is possible to adopt a system which removes gas by means of one suction pump 31. In this case, it is possible to detect the filter replacement period by pressure management by a single pressure meter inside the suction pump 31.

Furthermore, it is also possible to use two or more suction pumps 31, 31a.

There follows a description relating to the processing of the plastic raw material in the twin axis extruder when using the degassing device 5 according to the present invention as described above.

The plastic raw material is supplied from the hopper 3, and by rotation of the screws 2, 2a which are inserted into the extruder, passes along the cylinder 1, is conveyed to the screw in the mixing section, and is mixed and plasticized by the mixing screws, and then discharged from the front end of the extruder.

In order to prevent deterioration of the raw material due to oxidation, an inert gas is supplied to the interior of the extruder. Nitrogen gas is often used as this inert gas. By removing the inert gas and incorporated air, which are mixed in with the plastic raw material, and volatile components remaining in the plastic, and the like, in the degassing device 5, by means of an external suction source, the plastic raw material in the cylinder from the hopper 3 up to the mixing section screw is compressed, and the bulk density is increased. Consequently, the amount of raw material conveyed per revolution of the screws 2, 2a is increased, and the processing capacity can be raised dramatically.

The degassing device 5 is provided with the filters 6, 6a, and two or more degassing chambers, namely, the first and second degassing chambers 27, 27a which are connected individually to lines for removing the inert gas component and incorporated air mixed in with the plastic raw material, and hence the volatile components remaining in the plastic raw material, etc., and the inert gas component and incorporated air which has become mixed in with the plastic raw material, and the volatile components remaining in the plastic raw material, etc. are separated and removed from the plastic raw material, the solid plastic raw material in the cylinder from the hopper 3 to the mixing section screw is compressed, and as described above, the bulk density is increased, the amount of raw material conveyed per revolution of the screws 2, 2a is increased, and the processing capacity can be raised dramatically. However, due to the pressure differential before and after the filters 6, 6a, the solid plastic raw material which has been pressed and compressed before the filters 6, 6a gradually blocks up the filters 6, 6a, and the degassing (filtering) effect of the filters declines. In this case, by switching to the other chamber in which a new filter is provided, while still operating, it is possible to restore the function, and the advantageous effects can be maintained.

Furthermore, when the chambers 27, 27a are switched by the partition valve 24 during operation, a degassing effect cannot be obtained if both chambers 27, 27a are in a closed state. Therefore, during switching, it is necessary to perform an operation for temporarily opening both filter chambers 25, 25a, and switching to the other new filter chamber 25, 25a.

The degassing chambers 27, 27a which have opening/closing lids 29, 29a capable of sealing off the chambers 27, 27a are set to a negative pressure by an external suction source, in other words, the suction pumps 31, 31a. In this state, if the chambers 27, 27a are closed by the operating partition valve 24, and the opening/closing valves 30, 30a are closed in the lines for externally removing the inert gas components and incorporated air that has become mixed in with the plastic raw material, and the volatile components remaining in the plastic, and the like, then the negative pressure remains and it is difficult to open the opening/closing lids 30, 30a of the degassing chambers 27, 27a. Therefore, by supplying inert gas (nitrogen, or the like) and setting the pressure of the degassing chambers 27, 27a to pressure at a level of atmospheric pressure, or the like, it is possible to open the opening/closing lids 30, 30a of the degassing chambers 27, 27a, and the in-built filters 6, 6a can be replaced while operating the device continuously, without having to stop the twin screw extruder.

As a system for informing about a filter replacement in this case, as shown in the drawings, a pressure detector 20, which is provided in the cylinder 1 in order to detect the pressure in the cylinder and is installed on the upstream side from the opening of the plastic raw material supply hopper, detects a first pressure, where the internal pressure has increased due to gradual blocking of the filters 6, 6a by the plastic raw material and decline in the degassing function, compared to the internal pressure when a normal degassing function is being performed, or alternatively the pressure downstream of the filters 6, 6a is detected by the pressure meters 28A, 28B or a pressure meters provided in the suction pumps 31, 31a, and an alarm is issued to indicate that the replacement time of the filters 6, 6a has been reached.

### INDUSTRIAL APPLICABILITY

The continuous extrusion device based on a twin screw extruder according to the present invention enables replacement of a filter without stopping operation of the twin screw extruder, and enables great improvement in the processing capacity of the plastic raw material, by alternating use of a pair of filters which are provided in the degassing device.

### EXPLANATION OF REFERENCE NUMERALS

- 1: cylinder
- 2, 2a: screw
- 3: hopper
- 4: mixing section
- 5: degassing device
- 6, 6a: first and second filter
- 7: vent
- 13: inert gas
- 15: first pressure detector
- 16: screw hole
- 20: metal assembly
- 22, 23: first and second degassing device
- 24: partition valve
- 25, 25a: first and second filter chamber
- 27, 27a: first and second degassing chamber
- 28, 28a: first and second degassing line
- 28A, 28B: first and second pressure meter
- 29, 29a: first and second opening/closing lid
- 30, 30a: first and second opening/closing valve
- 31, 31a: suction pump
- 32: cylinder
- 33: piston
- 34: valve
- 34a: opening
- 34b: non-valve section
- 35: case
- 36: seal chamber
- 36a: pressure meter
- 40a, 40b: opening/closing valve
- 40A: inert gas supply line

## Claims

1. An extrusion method for a continuous extrusion device based on a twin screw extruder, in which first and second degassing devices (22, 23) are provided in a cylinder (1) which has a conveyance section (1A) including a hopper (3) and inside which a pair of screws (2, 2a) are provided, the extrusion device operating so as to push plastic raw material conveyed inside the cylinder (1) out from the downstream side of the cylinder (1), while at least inert gas components, incorporated air and volatile components contained in the plastic raw material are discharged externally via the degassing devices (22, 23), wherein
the degassing device (5)is provided with first and second filters (6, 6a) disposed to communicate with a screw hole (16) of the cylinder (1), and a partition valve (24) provided between the filters (6, 6a) and having a valve (34) for opening and closing communication between the filters (6, 6a) and the screw hole (16), are provided; and
when replacing the first or second filter (6, 6a) during operation, the valve (34) of the partition valve (24) is operated to establish a non-communicating state between the first or second filter (6, 6a) that is to be replaced and the screw hole (16), then the replacement is carried out, and by performing degassing using the first or second filter (6, 6a) that is not to be replaced, the extrusion operation can be carried out continuously without stopping operation during the replacement.

2. The continuous extrusion device based on a twin screw extruder according to claim 1, wherein the replacement time for replacing the first or second filter (6, 6a) is determined on the basis of a first pressure obtained by detecting a pressure inside the cylinder (1) or a second pressure obtained by detecting a pressure on the downstream side of the filters (6, 6a) in the degassing devices (5).

3. The continuous extrusion device based on a twin screw extruder according to claim 2, wherein the second pressure is detected by a pressure meter inside one or a plurality of suction pumps (31 or 31, 31a) provided on the downstream side of the degassing device (5) and the first and second degassing devices (22, 23).

4. The continuous extrusion device based on a twin screw extruder according to one of claims 1 to 3, wherein the filters (6, 6a) are of a cylindrical cartridge type or a lead disk type.

5. The continuous extrusion device based on a twin screw extruder according to one of claims 1 to 3, wherein the partition valve (24) comprises a single valve only, and the valve (34) has a cup-shaped cross-section and has one opening (34a).

6. The continuous extrusion device based on a twin screw extruder according to one of claims 1 to 5, wherein the partition valve (24) comprises a pair of valves, and the valve (34) has a cylindrical shape or a cup-shaped cross-section.

7. The continuous extrusion device based on a twin screw extruder according to one of claims 1 to 6, wherein first and second filter chambers (25, 25a) inside which the filters (6, 6a) are provided are cooled by cooling means.

8. The continuous extrusion device based on a twin screw extruder according to one of claims 1 to 7, wherein opening/closing lids (29, 29a) used during replacement of the filters (6, 6a) are provided in the degassing device (5).
